# EUROPÄISCHE PATENTSCHRIFT

(11) **EP 1 952 739 B1**
(45) Veröffentlichungstag und Bekanntmachung des Hinweises auf die Patenterteilung: **25.09.2013**
(21) Anmeldenummer: 07120534.8
(22) Anmeldetag: 13.11.2007
(51) Int. Cl.: A47J 45/07

(54) **Kochgerät mit Griffelement**
Cooking device with a handle
Appareil de cuisson doté d'un élément de poignée

(30) Priorität: 07.12.2006 DE 102006058041
(43) Veröffentlichungstag der Anmeldung: 06.08.2008
(73) Patentinhaber: HEINRICH BAUMGARTEN KG SPEZIALFABRIK FÜR BESCHLAGTEILE, 57290 Neunkirchen (DE)
(72) Erfinder: Baumgarten, Rolf-Günter, 57290, Neunkirchen (DE)
(74) Vertreter: Tappe, Hartmut

(56) Entgegenhaltungen:
- EP-A1- 0 288 560
- US-A- 2 494 159

## Beschreibung

Die Erfindung betrifft ein Kochgerät mit zumindest einem daran befe s-tigten Griffelement nach dem Oberbegriff des Anspruchs 1.

Gattungsgemäße Kochgeräte, beispielsweise Töpfe, Kasserollen oder Pfannen, sind mit jeweils zumindest einem Griffelement ausgestattet, um dem Benutzer die Handhabung des Kochgerätes zu ermöglichen. Um die getrennte Fertigung von Griffelement und dem eigentlichen Kochgerät zu ermöglichen, da beispielsweise unterschiedliche Materialien verwendet werden, ist es bei gattungsgemäßen Kochgeräten notwendig, dass das Griffelement nachträglich am Kochgerät befestigt wird. Bei gattungsgemäßen Kochgeräten ist dazu am Kochgerät ein Anschlusselement vorgesehen. Auf dieses Anschlusselement, beispielsweise einem aus Stahl oder Aluminium gefertigten Befestigungsbolzen, wird das Griffelement aufgeschoben, um die Haltekräfte zu übertragen. Im Griffelement ist dazu eine Befestigungsöffnung vorgesehen, die das Anschlusselement aufnimmt. Um das Abziehen des Griffelements vom Anschlusselement zuverlässig auszuschließen, ist bei gattungsgemäßen Kochgeräten ein Sicherungselement vorgesehen, das mit seinen Seitenwänden zwischen der Innenseite der Befestigungsöffnung und der Außenseite des Anschlusselements angeordnet ist. Dieses Sicherungselement weist zur Festlegung am Griffelement Widerhakenzähne auf, die sich beim Aufschieben des Griffelements auf das Anschlusselement in das Griffelement eingraben und dadurch eine form- und/oder kraftschlüssige Verbindung herstellen.

Ein derart gestaltetes Kochgerät mit einem Sicherungselement zur Befestigung des Griffelements auf dem Anschlusselement ist beispielsweise aus der EP 0 228 560 B1 bekannt. Nachteilig bei der dort beschriebenen Lösung ist es, dass das Sicherungselement vollflächig zwischen der Innenseite der Befestigungsöffnung und der Außenseite des Anschlusselements verpresst wird. Diese vollflächige Verpressung des Sicherungselements bewirkt, dass die Widerhakenzähne in unerwünschter Weise weitgehend umgelegt werden und nur noch geringe Haltekräfte aufbringen. Außerdem erfordert diese Art der vollflächigen Verpressung des Sicherungselements eine sehr exakte Fertigung mit geringen Fertigungstoleranzen, da ansonsten entweder ein zu großes Spiel zwischen Anschlusselement, Sicherungselement und Befestigungsöffnung gegeben ist, sodass das Griffelement wackelt bzw. aufgrund zu geringer Montagetoleranzen ein Fügen des Griffelements und des Sicherungselements auf dem Anschlusselement unmöglich gemacht wird.

Ausgehend von diesem Stand der Technik ist es deshalb Aufgabe der Erfindung, ein neues Kochgerät vorzuschlagen, das kostengünstig gefertigt werden kann und eine spielfreie Befestigung des Griffelements am Anschlusselement ermöglicht.

Diese Aufgabe wird durch ein Kochgerät nach der Lehre des Anspruchs 1 gelöst.

Vorteilhafte Ausführungsformen der Erfindung sind Gegenstand der Unteransprüche.

Die Erfindung beruht auf dem Grundgedanken, dass auf der Innenseite der Befestigungsöffnung Vorsprünge vorgesehen sind, an denen die Seitenwände des Sicherungselements spielfrei zur Anlage kommen und beim Einführen des Sicherungselements in die Befestigungsöffnung geführt werden können. Durch die Anbringung der Vorsprünge in der Befestigungsöffnung ergibt es sich, dass der Kontakt zwischen Sicherungselement und der Innenseite der Befestigungsöffnung nicht mehr vollflächig ist, sondern nur noch ein zonenhafter Kontakt an der Außenseite der Vorsprünge vorhanden ist. Im Übrigen wird dann zwischen den Vorsprüngen ein Spalt zwischen den Seitenwänden des Sicherungselements und der Innenseite der Befestigungsöffnung gebildet. Die Kontaktkräfte zwischen Sicherungselement und Befestigungsöffnung sind insofern auf die Kontaktzonen an den Vorsprüngen konzentriert. Diese Konzentration der Kontaktkräfte ermöglicht es, dass auch bei größeren Fertigungstoleranzen das Fügen von Griffelement und Sicherungselement auf dem Anschlusselement ohne weiteres möglich ist. Außerdem können die Widerhakenzähne des Sicherungselements so angeordnet werden, dass sie zwischen den Vorsprüngen liegen, sodass ein Verpressen der Widerhakenzähne beim Aufschieben des Griffelements auf das Anschlusselement ausgeschlossen ist. Durch die Vorsprünge wird im Zusammenwirken mit den sich zumindest geringfügig elastisch verformenden Widerhakenzähnen wird ein verbesserter Toleranzausgleich bei der Montage des Griffelements gewährleitstet.

Nach einer bevorzugten Ausführungsform sind die Vorsprünge an ihrer die Kontaktzone zum Sicherungselement bildenden Seite zumindest geringfügig verformbar und/oder abtragbar. Im Ergebnis können durch die geringfügige Verformung bzw. dem geringfügigen Abtrag der Vorsprünge größere Fertigungstoleranzen zwischen Anschlusselement, Sicherungselement und Befestigungsöffnung ausgeglichen werden.

Weiterhin ist es besonders vorteilhaft, wenn die Vorsprünge einen bogenförmigen Querschnitt aufweisen, da dadurch eine günstige Konzentration der Kontaktkräfte im Scheitelpunkt des Bogens realisiert wird. Die Kontaktzonen der Vorsprünge zum Sicherungselement hin, sollten jeweils punktförmig oder linienförmig ausgebildet sein, sodass ein großflächiger Kontakt im Wesentlichen nicht vorhanden ist.

Um das Einschieben des Sicherungselements in die Befestigungsöffnung zu erleichtern, sollten sich linienförmig ausgebildete Vorsprünge bevorzugt parallel zueinander in einer Richtung erstrecken, die der Einsteckrichtung des Anschlusselements in die Befestigungsöffnung entspricht.

Um einen definierten und sicheren Sitz des Sicherungselements an den Vorsprüngen zu gewährleisten, sind bevorzugt jeweils zwei Vorsprünge zur Anlage an einer Seitenwand des Sicherungselements vorgesehen. Weist das Sicherungselement beispielsweise einen rechteckigen Querschnitt mit vier Seitenwänden auf, so sollten in der Befestigungsöffnung insgesamt acht Vorsprünge vorgesehen sein, die jeweils paarweise an einer Seitenwand zur Anlage kommen.

Soweit jeweils zwei Vorsprünge zur Anlage an einer Seitenwand des Sicherungselements vorgesehen sind, sollte zwischen diesen beiden Vorsprüngen jeweils zumindest ein Widerhakenzahn angeordnet sein.

Um die Haltekräfte zwischen Anschlusselement, Sicherungselement und Griffelement noch weiter erhöhen zu können, können am Anschlusselement Rücksprünge vorgesehen werden. Diese Rücksprünge werden dabei den Vorsprüngen in der Befestigungsöffnung jeweils gegenüberliegend auf der anderen Seite des Sicherungselements angeordnet. Diese Anordnung der Rücksprünge ermöglicht es, dass die Seitenwände des Sicherungselements durch die Vorsprünge zumindest geringfügig in der Richtung der Rücksprünge verformt werden. Diese geringfügige elastische bzw. plastische Verformung des Sicherungselements bewirkt einen starken Kraft- bzw. Reibschluss zwischen Anschlusselement, Sicherungselement und Griffelement und erhöht auf diese Weise die maximalen Abzugskräfte.

Die seitlichen Ränder der am Anschlusselement vorgesehenen Rücksprünge sollten dabei als Biegekante wirken, sodass bei der elastischen bzw. plastischen Verformung der Seitenwände des Sicherungselements entsprechende Biegespannungen aufgebracht werden und das Sicherungselement auf diese Weise verspannt wird.

Die Biegekanten zum Verspannen des Sicherungselements in der Befestigungsöffnung können dabei bevorzugt durch die Außenradien gebildet werden, die an den Kanten des Anschlusselements vorgesehen sind.

Um auch bei großen Fertigungstoleranzen einen im Wesentlichen spielfreien Sitz des Griffelements auf dem Anschlusselement zu ermöglichen, ist es besonders vorteilhaft, wenn auf der Innenseite der Befestigungsöffnung an den Kontaktbereich der Vorsprünge ein zweiter Kontaktbereich mittelbar oder unmittelbar anschließt. In diesem zweiten Kontaktbereich, dessen Querschnitt beispielsweise etwas kleiner als der Querschnitt im Kontaktbereich der Vorsprünge gewählt sein kann, liegt das Anschlusselement spielfrei an der Innenseite der Befestigungsöffnung an. Dazu können im zweiten Kontaktbereich Rippen angeformt sein, die mit ihren freien Enden spielfrei an der Außenseite des Anschlusselements zur Anlage kommen.

In welcher Weise das Sicherungselement am Anschlusselement befestigt ist, ist grundsätzlich beliebig. Zur Befestigung des Sicherungselements am Anschlusselement können jedoch wiederum Widerhakenzähne vorgesehen sein, die sich in das Material des Anschlusselements beim Aufschieben des Griffelements eingraben und dadurch das Sicherungselement an dem Anschlusselement festlegen.

In welcher Weise das Sicherungselement gefertigt ist bzw. welches Material dazu verwendet wird, ist grundsätzlich beliebig. Eine besonders kostengünstige Fertigung wird ermöglicht, wenn das Sicherungselement einschlägig in der Art eines Blechbiegeteils hergestellt ist. Bevorzugt sollte dabei Federstahlblech verwendet werden, um mit den Widerhakenzähnen entsprechend hohe Haltekräfte aufbringen zu können.

Eine Ausführungsform der Erfindung ist in den Zeichnungen schematisch dargestellt und wird nachfolgend beispielhaft erläutert.

Es zeigen:
- **Fig. 1**: ein Kochgerät mit dem daran zu befestigenden Griffelement vor der Montage in perspektivischer Ansicht;
- **Fig. 2**: den Befestigungsbereich zwischen Anschlusselement, Sicherungselement und Griffelement des Kochgeräts gemäß Fig. 1 im Längsschnitt;
- **Fig. 3**: den Kontaktbereich gemäß **Fig. 2** im Querschnitt entlang der Schnittlinie des A-A;
- **Fig. 4**: den Befestigungsbereich gemäß **Fig. 2** im Querschnitt entlang der Schnittlinie B-B.

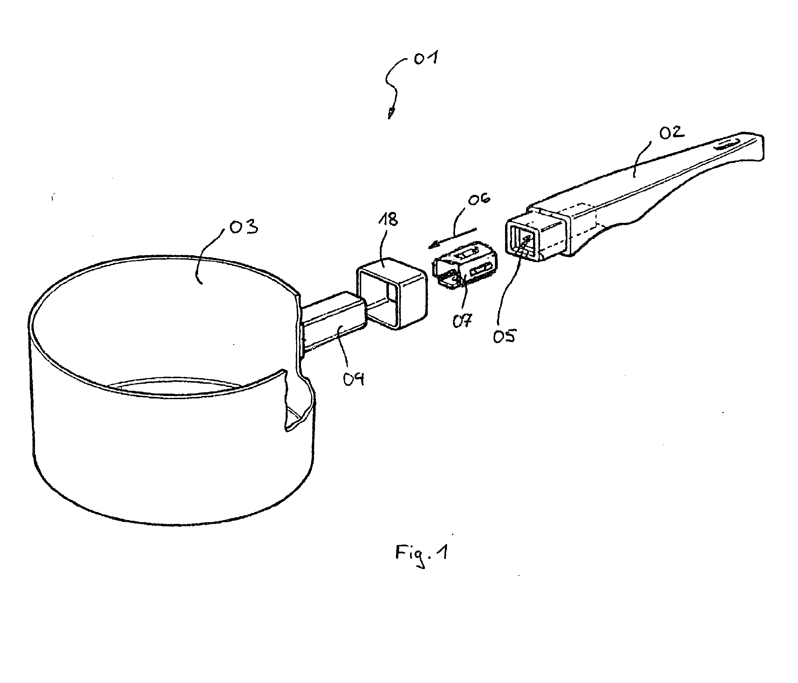

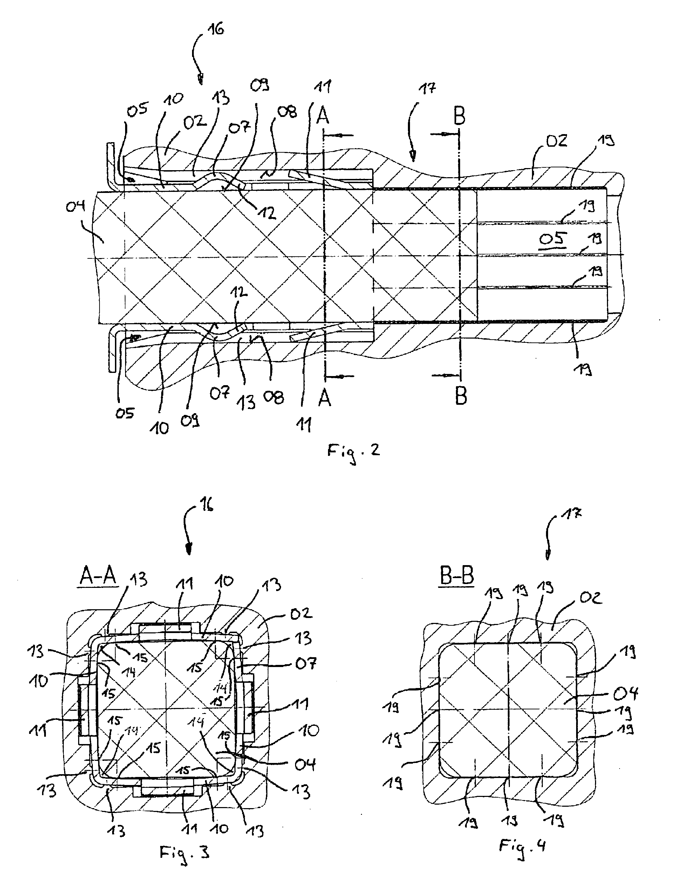

In **Fig. 1** ist ein Kochgerät 01 vor der Montage eines Griffelements 02 in perspektivischer Ansicht dargestellt. Zur Befestigung des Griffelements 02 an der Wandung 03 des Kochgeräts 01 ist an der Außenseite der Wandung 03 ein Anschlusselement 04 befestigt. Auf dieses Anschlusselement 04 wird das Griffelement 02 mit einer Befestigungsöffnung 05 in Einsteckrichtung 06 aufgeschoben, wobei zur Festlegung des Griffelements 02 auf dem Anschlusselement 04 ein Sicherungselement 07 dient. Der Befestigungsbereich zwischen Griffelement 02 und Anschlusselement 04 wird nach außen hin von einem Abdeckelement 18 überdeckt. Die Funktionsweise des Sicherungselements 07 bei der Befestigung des Griffelements 02 am Anschlusselement 04 wird nachfolgend anhand der Schnittzeichnungen in **Fig. 2** und **Fig. 3** erläutert.

**Fig. 2** zeigt das Anschlusselement 04 nach dem Einstecken in die Befe s-tigungsöffnung 05. Das Sicherungselement 07 ist zwischen der Innenseite 08 der Befestigungsöffnung 05 und der Außenseite 09 des Anschlusselements 04 angeordnet. An allen vier Seitenwänden 10 ist jeweils ein sich nach außen erstreckender Widerhakenzahn 11 vorgesehen, der sich mit seiner Außenkante an der Innenseite 08 der Befestigungsöffnung 05 in das Material des Griffelements 02 eingräbt und auf diese Weise nach dem Aufschieben des Griffelements 02 auf das Anschlusselement 04 ein Zurückziehen des Griffelement 02 relativ zum Sicherungselement 07 ausschließt.

Weiterhin ist an allen vier Seitenwänden 10 jeweils ein sich nach innen erstreckender Widerhakenzahn 12 vorgesehen, der sich beim Aufschieben des Sicherungselements 07 auf das Anschlusselement in das Material des Anschlusselements 04 eingräbt und somit ein Abziehen des Sicherungselements 07 relativ zum Anschlusselement 04 ausschließt. Im Ergebnis bewirken also die vier Widerhakenzähne 11 und die vier Widerhakenzähne 12 eine zuverlässige Fixierung des Griffelements 02 auf dem Anschlusselement 04.

In der Befestigungsöffnung 05 sind auf der Innenseite 08 insgesamt acht Vorsprünge 13 an das Material des Griffelements 02 angeformt. Wie insbesondere aus **Fig. 3** ersichtlich, kommen die Seitenwände 10 des Sicherungselements 07 im ersten Kontaktbereich 16 nur in den linienförmig verlaufenden Kontaktzonen der Vorsprünge 13 mit dem Material des Griffelements 02 in Kontakt. Im Ergebnis wird das Sicherungselement 07 also durch die Vorsprünge 13 spielfrei geführt, wobei beim Aufschieben des Griffelements 02 auf das Anschlusselement 04 die Vorsprünge 13 zumindest geringfügig elastisch verformt werden, um dadurch einen Toleranzausgleich zu ermöglichen. Die Vorsprünge 13 weisen einen bogenförmigen Querschnitt auf und liegen mit dem Scheitelpunkt des bogenförmigen Querschnitts an den Seitenwänden 10 des Sicherungselements 07 an. Da sich die linienförmig verlaufenden Vorsprünge 13 parallel zueinander in Einsteckrichtung 06 erstrecken, kann das Sicherungselement 07 leicht in die Befestigungsöffnung 05 eingeschoben werden.

Jeweils zwei Vorsprünge 13 sind einer Seitenwand 10 des Sicherungselements 07 zugeordnet, wobei zwischen den paarweise einer Seitenwand 10 zugeordneten Vorsprüngen 13 jeweils die Widerhakenzähne 11 und 12 angeordnet sind. Im Ergebnis wird dadurch erreicht, dass die Widerhakenzähne 11 und 12 sich in den von den Vorsprüngen 13 gebildeten Spalt zwischen Anschlusselement 04 und Griffelement 02 erstrecken können und somit beim Aufschieben des Griffelements 02 auf das Anschlusselement 04 nicht unerwünscht verpresst werden.

Wie weiter aus **Fig. 3** ersichtlich ist, sind am Anschlusselement 04 den Vorsprüngen 13 gegenüberliegend, Rücksprünge 14 vorgesehen, in denen die Außenseite 09 des Anschlusselements 04 nicht an den Seitenwänden 10 des Sicherungselements 07 anliegt. In der dargestellten Ausführungsform sind die Rücksprünge 14 von den Hohlräumen gebildet, die sich durch die Außenradien an den Kanten des Anschlusselements 04 ergeben. Da die Seitenwände 10 des Sicherungselements 07 im Bereich der Rücksprünge 14 nicht abgestützt sind, können die Vorsprünge 13 die Seitenwände geringfügig in Richtung der Rücksprünge 14 verformen. Im Bereich der Außenradien des Anschlusselements 04 bilden sich dabei Biegekanten 15, die in **Fig. 3** schematisch angedeutet sind. Über diese Biegekanten 15 werden die Seitenwände 10 unter Aufbringung von Biegespannungen verspannt, was zu einem erhöhten Kraftschluss zwischen Anschlusselement 04, Sicherungselement 07 und Griffelement 02 führt und damit die maximalen Abzugkräfte erhöht.

An dem ersten Kontaktbereich 16 zwischen Anschlusselement 04, Sicherungselement 07 und Griffelement 02 schließt sich ein zweiter Kontaktbereich 17 an, der in **Fig. 4** im Querschnitt dargestellt ist. Im zweiten Kontaktbereich 17 liegt die Außenseite 09 des Anschlusselements 04 an Rippen 19 an, die im Kontaktbereich 17 auf der Innenseite der Befestigungsöffnung 05 angeformten sind, und gewährleistet dadurch einen spielfreien Sitz des Griffelements 02 am Anschlusselement 04.

## Patentansprüche

1. Kochgerät (01) mit zumindest einem Griffelement (02), wobei am Kochgerät (01) ein insbesondere prismatisch geformtes Anschlusselement (04) befestigt ist, auf dessen freies Ende das Griffelement (02) mit einer Befestigungsöffnung (05) aufgeschoben werden kann, und wobei zur Festlegung des Griffelements (02) auf dem Anschlusselement (04) ein Sicherungselement (07) vorgesehen ist, das mit seinen Seitenwänden (10) zwischen der Innenseite (08) der Befestigungsöffnung (05) und der Außenseite (09) des Anschlusselements (04) angeordnet ist, und wobei das Sicherungselement (07) zumindest zwei sich nach außen erstreckende Widerhakenzähne (11) aufweist, die sich beim Aufschieben des Griffelements (02) auf das Anschlusselement (04) zumindest geringfügig verformen und/oder zumindest geringfügig in das Material des Griffelements (02) eingraben, **dadurch gekennzeichnet,**
**dass** auf der Innenseite (08) der Befestigungsöffnung (05) Vorsprünge (13) vorgesehen sind, an denen die Seitenwände (10) des Sicherungselements (07) zur Anlage kommen und zumindest geringfügig elastisch verspannt werden.

2. Kochgerät nach Anspruch 1,
**dadurch gekennzeichnet,**
**dass** die Vorsprünge (13) an ihren die Kontaktzone zum Sicherungselement (07) bildenden Seite zumindest geringförmig verformbar und/oder abtragbar sind.

3. Kochgerät nach Anspruch 1 oder 2,
**dadurch gekennzeichnet,**
**dass** die Vorsprünge (13) einen bogenförmigen Querschnitt aufweisen.

4. Kochgerät nach einem der Ansprüche 1 bis 3,
**dadurch gekennzeichnet,**
**dass** die Kontaktzone der Vorsprünge (13) zum Sicherungselement (07) punktförmig oder linienförmig ausgebildet ist.

5. Kochgerät nach Anspruch 4,
**dadurch gekennzeichnet,**
**dass** sich die Vorsprünge (13) linienförmig parallel zueinander in eine Richtung erstrecken, die der Einsteckrichtung (06) beim Aufschieben des Anschlusselements (04) in die Befestigungsöffnung (05) des Griffelements (02) entspricht.

6. Kochgerät nach einem der Ansprüche 1 bis 5,
**dadurch gekennzeichnet,**
**dass** an den einzelnen Seitenwänden (10) des Sicherungselements (07) jeweils zwei Vorsprünge (13) zur Anlage kommen.

7. Kochgerät nach Anspruch 6,
**dadurch gekennzeichnet,**
**dass** zwischen den beiden einer Seitenwand (10) des Sicherungselements (07) zugeordneten Vorsprüngen (13) zumindest ein Widerhakenzahn (11, 12) angeordnet ist.

8. Kochgerät nach einem der Ansprüche 1 bis 7,
**dadurch gekennzeichnet,**
**dass** am Anschlusselement (04) Rücksprünge (14) vorgesehen sind, wobei die Rücksprünge (14) den Vorsprüngen (13) in der Befestigungsöffnung (05) jeweils gegenüberliegend auf der anderen Seite des Sicherungselements (07) angeordnet sind und eine zumindest geringförmige Verformung der Seitenwände (10) des Sicherungselements (07) durch die Vorsprünge (13) in Richtung der Rücksprünge (14) ermöglichen.

9. Kochgerät nach Anspruch 8,
**dadurch gekennzeichnet,**
**dass** die seitlichen Ränder der Rücksprünge (14) als Biegekante (15) wirken, über die die Seitenwände (10) des Sicherungselements (07) von den Vorsprüngen (13) unter Aufbringung einer zumindest geringfügigen Biegespannung verspannt werden, wobei die Rücksprünge (14) insbesondere von einer Fase gebildet sein können.

10. Kochgerät nach Anspruch 9,
**dadurch gekennzeichnet,**
**dass** die Biegekante von Außenradien gebildet werden, die an den Kanten des Anschlusselements (04) vorgesehen sind.

11. Kochgerät nach einem der Ansprüche 1 bis 10,
**dadurch gekennzeichnet,**
**dass** auf der Innenseite (08) der Befestigungsöffnung (05) an den von den Vorsprüngen (13) gebildeten Kontaktbereich (16) ein zweiter Kontaktbereich (17) mittelbar oder unmittelbar anschließt, wobei im zweiten Kontaktbereich (17) die Außenseite (09) des Anschlusselements (04) zumindest bereichsweise, insbesondere mit angeformten Rippen, spielfrei an der Innenseite (08) der Befestigungsöffnung (05) zur Anlage kommt.

12. Kochgerät nach einem der Ansprüche 1 bis 11,
**dadurch gekennzeichnet,**
**dass** das Sicherungselement (07) zumindest zwei sich nach innen erstreckende Widerhakenzähne (12) aufweist, die sich in das Material des Anschlusselements (04) eingraben und das Sicherungselement (07) am Anschlusselement (04) festlegen.

13. Kochgerät nach einem der Ansprüche 1 bis 12,
**dadurch gekennzeichnet,**
**dass** das Sicherungselement (07) einstückig in der Art eines Blechbiegeteils hergestellt ist.

14. Kochgerät nach einem der Ansprüche 1 bis 13,
**dadurch gekennzeichnet,**
**dass** das Sicherungselement (07) aus Federstahlblech hergestellt ist.

## Claims

1. A cooking device (01) with at least one handle element (02), wherein to the cooking device (01) an in particular prismatic-shaped connecting element (04) is attached, onto the free end of which the handle element (02) can be pushed with a fastening opening (05), and wherein for securing the handle element (02) on the connecting element (04), a securing element (07) is provided which is arranged with its side walls (10) between the inner side (08) of the fastening opening (05) and the outer side (09) of the connecting element (04), and wherein the securing element (07) has at least two barbed teeth (11) extending to the outside which are at least slightly deformed and/or at least slightly dig into the material of the handle element (02) when the handle element (02) is pushed onto the connecting element (04),
**characterized in that**
on the inner side (08) of the fastening opening (05), protrusions (13) are provided against which the side walls (10) of the securing element (07) abut and to which they are at least slightly elastically braced.

2. The cooking device according to claim 1,
**characterized in that**
the protrusions (13) can be at least slightly deformed and/or abraded on their side which forms the contact zone to the securing element (07).

3. The cooking device according to claim 1 or 2,
**characterized in that**
the protrusions (13) have an arched cross section.

4. The cooking device according to any of the claims 1 to 3, **characterized in that**
the contact zone of the protrusions (13) to the securing element (07) is formed dot-shaped or line-shaped.

5. The cooking device according to claim 4,
**characterized in that**
the protrusions (13) extend linearly parallel to one another in a direction which corresponds to the direction of insertion (06) as the connecting element (04) is pushed into the fastening opening (05) of the connecting element (02).

6. The cooking device according to any of the claims 1 to 5, **characterized in that**
two protrusions (13) abut against each of the individual side walls (10) of the securing element (07).

7. The cooking device according to claim 6,
**characterized in that**
between the two protrusions (13) allocated to a side wall (10) of the securing element (07), at least one barbed tooth (11, 12) is arranged.

8. The cooking device according to any of the claims 1 to 7, **characterized in that**
recesses (14) are provided on the connecting element (04), wherein on the other side of the securing element (07) the recesses (14) are arranged respectively opposite of the protrusions (13) in the fastening opening (05) and allow for an at least slight deformation of the side walls (10) of the securing element (07) by the protrusions (13) in the direction of the recesses (14).

9. The cooking device according to claim 8,
**characterized in that**
the lateral edges of the recesses (14) act as a bending edge (15) over which the side walls (10) of the securing element (07) are braced by the protrusions (13) which apply at least slight bending stress, wherein the recesses (14) can be formed in particular by a chamfer.

10. The cooking device according to claim 9,
**characterized in that**
the bending edges are formed by outside radii which are provided on the edges of the connecting element (04).

11. The cooking device according to any of the claims 1 to 10, **characterized in that**
on the inner side (08) of the fastening opening (05), a second contact area (17) is indirectly or directly adjacent to the contact area (16) formed by the protrusions (13), wherein, in the second contact area, (17) the outer side (09) of the connecting element (04) abuts at least in portions, in particular with ribs formed thereon, without play against the inner side (08) of the fastening opening (05).

12. The cooking device according to any of the claims 1 to 11, **characterized in that**
the securing element (07) has at least two barbed teeth (12) extending to the inside which dig into the material of the connecting element (04) and fasten the securing element (07) on the connecting element (04).

13. The cooking device according to any of the claims 1 to 12, **characterized in that**
the securing element (07) is formed integrally in the manner of a metal sheet bending part.

14. The cooking device according to any of the claims 1 to 13, **characterized in that**
the securing element (07) is made of spring steel sheet metal.

## Revendications

1. Dispositif de cuisson (01) avec au moins un élément de poignée (02), dans lequel au dispositif de cuisson (01) un élément de connexion (04) en particulier formé prismatique est attaché sur l'extrémité libre duquel l'élément de poignée (02) peut être poussé avec une ouverture de fixation (05), et dans lequel pour définir l'élément de poignée (02) sur l'élément de connexion (04) un élément d'arrêt (07) est pourvu qui est arrangé avec ses murs latéraux (10) entre le côté interne (08) de l'ouverture de fixation (05) et le côté externe (09) de l'élément de connexion (04), et dans lequel l'élément d'arrêt (07) a au moins deux dents barbelées (11) s'étendant vers l'extérieure qui se déforment au moins légèrement et/ou se gravent au moins légèrement dans le matériau d'élément de poignée (02) quand l'élément de poignée (02) est poussé sur l'élément de connexion (04),
**caractérisé en ce que**
sur le côté interne (08) de l'ouverture de fixation (05) des saillies (13) sont pourvues contre lesquelles les murs latéraux (10) de l'élément d'arrêt (07) buttent et auxquelles ils (10) sont serrés au moins légèrement élastiquement.

2. Dispositif de cuisson selon la revendication 1,
**caractérisé en ce que**
les saillies (13) sont au moins légèrement déformables et/ou abrasables à leur côté formant la zone de contact à l'élément d'arrêt (07).

3. Dispositif de cuisson selon les revendications 1 ou 2,
**caractérisé en ce que**
les saillies (13) ont une section transversale en forme d'un arc.

4. Dispositif de cuisson selon l'une quelconque des revendications 1 à 3,
**caractérisé en ce que**
la zone de contact des saillies (13) à l'élément d'arrêt (07) est formée en forme de point ou en forme de ligne.

5. Dispositif de cuisson selon la revendication 4,
**caractérisé en ce que**
les saillies (13) s'étendent linéairement parallèle l'une à l'autre dans une direction qui correspond à la direction d'insertion (06) en insérant l'élément de connexion (04) dans l'ouverture de fixation (05) de l'élément de poignée (02).

6. Dispositif de cuisson selon l'une quelconque des revendications 1 à 5,
**caractérisé en ce que**
deux saillies (13) buttent respectivement contre les murs latéraux (10) individuels de l'élément d'arrêt (07).

7. Dispositif de cuisson selon la revendication 6,
**caractérisé en ce qu'**
entre les deux saillies (13) attribuées à un mur latéral (10) de l'élément d'arrêt (07) au moins une dent barbelée (11, 12) est arrangée.

8. Dispositif de cuisson selon l'une quelconque des revendications 1 à 7,
**caractérisé en ce qu'**
à l'élément de connexion (04), des renfoncements (14) sont pourvus, dans lequel les renfoncements (14) sont arrangés respectivement en face des saillies (13) dans l'ouverture de fixation (05) sur l'autre côté d'élément d'arrêt (07) et permettent une déformation au moins légère des murs latéraux (10) de l'élément d'arrêt (07) par les saillies (13) dans la direction des renfoncements (14).

9. Dispositif de cuisson selon la revendication 8,
**caractérisé en ce que**
les bords latéraux des renfoncements (14) agissent comme bord de pliage (15) par lequel les saillies (13) serrent les murs latéraux (10) de l'élément d'arrêt (07) en appliquant une tension pliante au moins légère, dans lequel les renfoncements (14) peuvent être formés en particulier d'un chanfrein.

10. Dispositif de cuisson selon la revendication 9,
**caractérisé en ce que**
le bord de pliage est formé par des rayons extérieurs qui sont pourvus sur les bords de l'élément de connexion (04).

11. Dispositif de cuisson selon l'une quelconque des revendications 1 à 10,
**caractérisé en ce que**
sur le côté interne (08) de l'ouverture de fixation (05) à la région de contact (16) formée par les saillies (13) une deuxième région de contact (17) se joint indirectement ou directement, dans lequel dans la région de contact (17) deuxième le côté externe (09) de l'élément de connexion (04) bute au moins en régions, en particulier avec des côtes formées dessus, sans jeu contre le côté interne (08) de l'ouverture de fixation (05).

12. Dispositif de cuisson selon l'une quelconque des revendications 1 à 11,
**caractérisé en ce que**
l'élément d'arrêt (07) a au moins deux dents barbelées (12) s'étendant à l'intérieure qui se gravent dans le matériau de l'élément de connexion (04) est définissent l'élément d'arrêt (07) sur l'élément de connexion (04).

13. Dispositif de cuisson selon l'une quelconque des revendications 1 à 12,
**caractérisé en ce que**
l'élément d'arrêt (07) est fabriqué intégralement à la façon d'une pièce à tôle plié.

14. Dispositif de cuisson selon l'une quelconque des revendications 1 à 13,
**caractérisé en ce que**
l'élément d'arrêt (07) est fabriqué de tôle en acier à ressort.
